# EUROPEAN PATENT APPLICATION

(11) **EP 1 791 398 A1**
(43) Date of publication of application: **30.05.2007**
(21) Application number: 05425825.6
(22) Date of filing: 22.11.2005
(51) Int. Cl.: H05B 33/08

(54) **A driving arrangement for LED cells**

(71) Applicant: Patent-Treuhand-Gesellschaft für elektrische Glühlampen mbH, 81543 München (DE); OSRAM S.P.A. - SOCIETA' RIUNITE OSRAM EDISON CLERICI, 20144 Milano (IT)
(72) Inventor: Zanforlin, Nicola, 35011 Campodarsego (IT)
(74) Representative: Bosotti, Luciano

(57) **Abstract**

A driving arrangement for feeding a current generated by a high frequency generator (10) to a plurality of LED cells (50R, 50G, 50B) each including at least one respective LED, includes:
- a magnetic element (35) in the flowpath of the current from the generator (10) to the LED cells (50R, 50G, 50B),
- at least two electronic switches (30a, 30b) arranged for connection in a half bridge configuration to the output of the generator (10) and defining a common output node (31) to which the magnetic element (35) is connected,

- a plurality of LED channels (1, 2, 3; 1', 2', 3') each for feeding a respective one of the LED cells (50R, 50G, 50B), wherein the LED channels (1, 2, 3; 1', 2', 3') are arranged in a parallel configuration therebetween starting from the magnetic element (35).

## Description

### Field of the invention

The present invention relates to arrangements for driving light emitting diodes (LEDs).

The invention has been developed with specific attention paid to its possible use in arrangements including a plurality of LED cells, such LED cells comprising a trichromatic (e.g. RGB) lighting system and in general comprising a multichromatic lighting system, e.g. defining a tunable-white lighting system.

### Description of the related art

In addition to the use as display units, light emitting diodes (LEDs) are becoming increasingly popular as lighting sources. This applies primarily to so-called high-flux (HF) or high-brightness LEDs. Typically, these LEDs are arranged in cells, with each cell comprised of one or more LEDs coupled in a parallel/series arrangement.

A combination of a plurality of cells each including one or more LEDs, usually disposed in channels, i.e. assemblies of LED cells and related circuitry driven by a same driving current, and having a given emission wavelength (i.e. respective "colour") produce combined light radiation whose characteristics (spectrum, intensity, and so on) can be selectively adjusted by properly controlling the contribution of each cell. For instance, three cells each including a set of diodes emitting at the wavelength of one of the fundamental colours of three-chromatic system (e.g. RGB) produce white light and/or radiation of a selectively variable colour. Such arrangements may include i.a. so-called tunable-white systems adapted to produce white light of different "temperatures". Substantially similar arrangements may include cells each comprised of one or more LEDs of essentially the same colour and produce light sources whose intensities may be selectively adjusted to meet specific lighting requirements (for instance providing different lighting levels in different areas of a given space, a display area and so on).

Arrangements adapted for driving a plurality of such cells in association with a single constant current source are known in the art as witnessed, e.g. by WO-A-2004/100612 or DE-A-101 03 611.

Essentially, in these prior art arrangements each cell has an associated switch (typically, an electronic switch) adapted to act as a selectively activatable short-circuit path to the cell. When the switch is activated (i.e. the switch is "closed") the LED or LEDs in the associated cell are short-circuited and no radiation is generated by the cell. Conversely, when the switch is de-activated (i.e. the switch is "open") the LED or LEDs in the associated cell are energized and radiation is generated by the cell. The arrangement includes a controller configured to control operation of the switches (typically according a Pulse Width Modulation - PWM control law). Such an arrangement permits to selectively and automatically adjust the contribution of each cell to the overall light flux produced. Additionally, by resorting to such an arrangement, the current power source is never completely turned off, but only driven through different path, thus ensuring a full-range dimmability of the light source.

Conventional solutions use an independent current source for each LED channel. Such a solution involves high costs and circuit complexity: at least one dedicated power stage is required for each channel, such a power stage typically comprising one power switch, one power diode, one magnetic element (i.e. inductor) and one controller to allow independent current control of each channel.

### Object and summary of the invention

While the prior art arrangements considered in the foregoing are capable of providing satisfactory operation, the need is felt for arrangements where the number of elements composing the driving stage is reduced to a minimum, thus correspondingly reducing the costs associated with manufacturing the related circuit.

The object of the present invention is thus to provide a fully satisfactory solution to the problem outlined above.

According to the present invention, that object is achieved by means of a driving arrangement having the features set forth in the claims that follow.

The claims are an integral part of the disclosure of the invention provided herein.

A preferred embodiment of the invention is thus a driving arrangement for feeding a current generated by a high frequency generator to a plurality of LED cells each including at least one respective LED, the arrangement including:
- a magnetic element in the flowpath of said current from said generator to said LED cells,
- at least two electronic switches arranged for connection in a half bridge configuration to the output of said generator and defining a common output node to which said magnetic element is connected,
- a plurality of LED channels each for feeding a respective one of said plurality of LED cells, said plurality of LED channels being arranged in a parallel configuration therebetween starting from said magnetic element.

Essentially, the arrangement described herein takes full advantage of the capability of the two MOSFETS in half bridge configuration of operating as a HF voltage source, supplying an output current that, in virtue of the big dynamic impedance introduced by decoupling capacitors in the different LED channels, has a very negligible dependence on the LEDs forward voltage drop.

### Brief description of the annexed drawings

The invention will now be described, by way of example only, with reference to the enclosed figures of drawing, wherein:
- Figure 1 is a circuit diagram exemplary of a first embodiment of the driver arrangement described herein,
- Figure 2 is a circuit diagram exemplary of a second embodiment of the driver arrangement described herein,
- Figure 3 is a time diagram representative of operation of the driver arrangement represent in Figure 2.

### Detailed description of exemplary embodiments of the invention

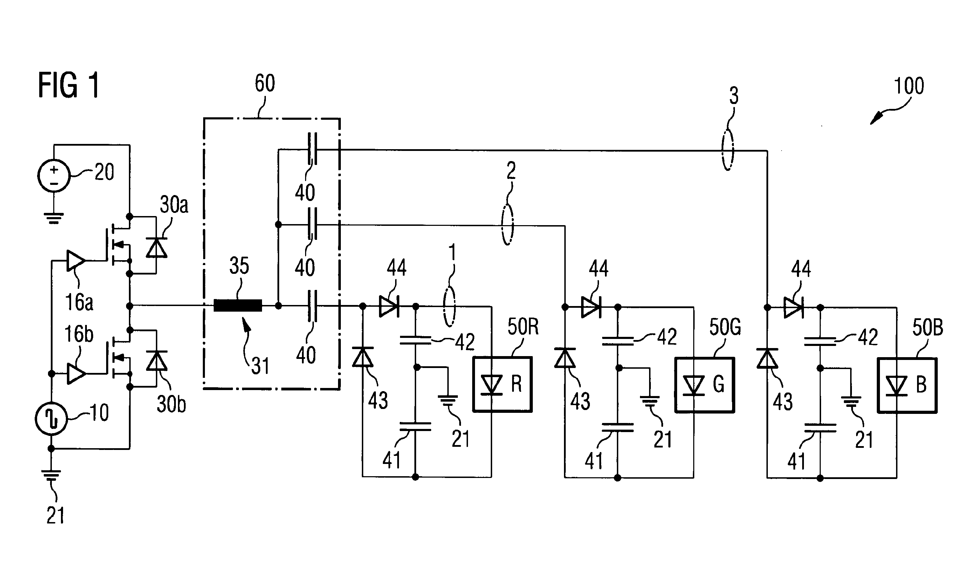

Figure 1 illustrates a circuit diagram of a driving arrangement 100 for three LED cells comprising a RGB lighting arrangement. Such a driving arrangement is substantially a "buck" HF driver.

In Figure 1 reference numeral 10 denotes a square wave generator, that supplies its signal via two respective drivers 16a and 16b to two electronic switches (preferably in the form of two MOSFETs 30a and 30b) connected in a half bridge configuration. Specifically, the source of the MOSFET 30a is connected to a dc voltage supply 20 and the drain of the MOSFET 30b is connected to a ground node, indicated by the reference numeral 21.

The drain of the MOSFET 30a and the source of the MOSFET 30b define a common output node 31. An inductor 35, i.e. a magnetic element that controls the current to be delivered to the load, is connected to the output node 31. Connected in series to the inductor 35 is the parallel connection of three channels, indicated by respective reference numerals 1, 2 and 3. The channels in question are thus equal in number to the LED cells, i.e. one for each of the LED cell to be driven, the including a red LED cell 50R, a green LED cell 50G and a blue LED cell 50B.

The channel 1, supplying e.g. the red LED cell 50R, comprises in the first place a decoupling capacitor 40, placed in series with respect to the inductor 35. Downstream of the decoupling capacitor 40 a "voltage-doubler-like" structure is provided, comprising a reverse biased diode 43, connected to the ground 21 through a first (preferably ceramic) capacitor 42 and a direct biased diode 44 connected to the ground 21 through a second (preferably ceramic) capacitor 41. The red LED cell 50R is connected between the terminals of the ceramic capacitors 41, 42 that are not connected to the ground 21.

The channel 2 pertaining to green LED cell 50G and the channel 3 pertaining to blue LED cell 50R replicate the same structure of the red channel, with respective capacitors 40, diodes 43 and 44 and ceramic capacitors 41 and 42.

The MOSFETs 30a and 30b are operated by the square wave generator 10 with a duty cycle very close to 50% and they behave like a HF voltage source. Thus, by connecting on their common output node 31 a capacitor, i.e. a decoupling capacitor 40 with a determined value, it is possible to produce on the load a proportional current flow on the load, represented by the LED channels 1, 2, 3.

Because of the great dynamic impedance introduced by the decoupling capacitor 40, such a current flow is largely independent of little variations in the LED forward voltage drop. The capacitor 40 can be a low-cost and low-size capacitor, in view of the high frequency of operation.

By way of example, the square wave generator 10 is a inverter operating at 150 KHz and applying a 24 V voltage to a 1,8 nH inductor 35. The MOSFETs 30a and 30b can be considered as presenting a 50 mΩ resistance, whereas the capacitor 40 has a capacity of 47 nF. By further way of example, the three LED cells shows a resistance of 9 Ω each and a forward voltage Vf of 11, 13.5 and 16 V respectively. The capacitors 41 and 42 can be chosen having a 1 µF value.

LEDs require a unidirectional and preferably constant current source. For that reason the two diodes 43, 44 and of the two ceramic capacitors 41, 42 are provided in each channel. This structure (termed a "voltage-doubler-like" structure in the foregoing) produces the current required, by doubling the frequency of the power source, thus making dynamic response very fast.

The inductor 35 reduces the current spikes on the MOSFETs 30a and 30b due to the resulting load capacitive impedance. Such inductor 35 and the decoupling capacitors 40 in each channel 1, 2, and 3 form also a resonant circuit, indicate as whole with the reference numeral 60 in Figure 1.

If the MOSFETs 30a and 30b working frequency is a little bit less than the resulting resonance frequency associated to such resonant circuit 60, it is possible to obtain a low circulating reactive power and zero current operation for the MOSFETs (low switching losses).

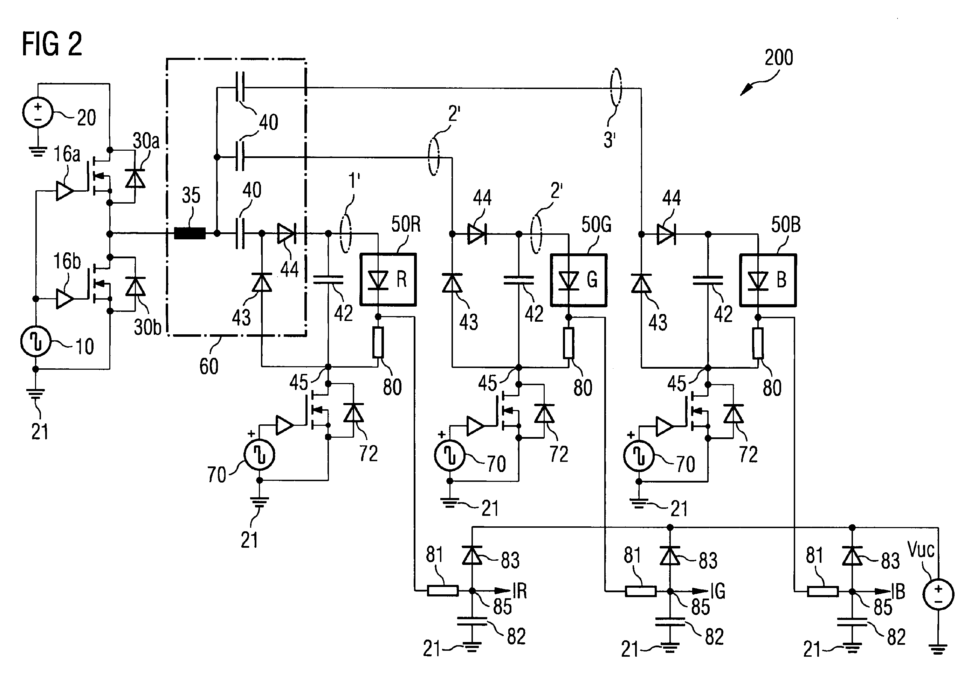

Figure 2 illustrates a second embodiment of a driving arrangement 200 according to the invention. There, in order to change the brightness of each channel and perform a dimming function, an extra MOSFET 72 is added, driven by a respective low side driver 70, i.e. a square wave generator operating in low frequency PWM mode. The circuit of figure 2 largely corresponds to the circuit already described with reference to figure 1, so that the same reference numerals already appearing in figure 1 are used to designate identical or equivalent elements in figure 2.

By limiting the description to the channel 1' that drives the red LED cell 50R (the same description applies mutatis mutandis also to the two other channels 2', 3'), the driving arrangement 200 of figure 2 shows a first difference with respect to the driving arrangement of figure 1 in that the voltage-doubler-structure is here partly modified by eliminating the ceramic capacitor 42 arranged in series to the reverse diode 43. The reverse diode 43 and the direct diode 41 however still ensure that a unidirectional current is provided to the LED cell 50R. The reverse diode 43 and the ceramic capacitor 41 are now connected in a node 45. The extra-MOSFET 72, driven by the low side driver 70 through its gate electrode is interposed between the node 45 and ground 21. On the same node 45 a first terminal of a shunt resistance 80 is connected whose other terminal is in turn connected to the positive terminal of the LED cell 50R. A second resistance 81 is connected in parallel with such shunt resistance 80, starting from such positive terminal of the LED cell 50R and terminating in a node 85. A safety voltage generator Vuc is connected through a reverse biased clamping diode 83 to such node 85, that is connected to the ground 21 through a capacitor 82.

By way of example, the resistance 81 has a value of 10 KΩ, while the capacitor 82 has a value of 220 pF.

The circuit described with reference to Figure 2 operates thus in a similar way with respect to the circuit 100 of Figure 1, but without the use of a voltage doubler stage. This configuration reduces the dynamic response, but allows for dimming the different channels 1, 2, 3 corresponding to RGB, using ground referenced MOSFETs.

The shunt obtained via the shunt resistance 80 senses the current value during a switch-on interval Ton, during which the LED cell 50R is lit, if a precision current control is required. During such switch-on interval Ton the extra MOSFET 72 behaves like a short circuit. Thus, if the shunt value is much larger than the drain-source resistance of the extra MOSFET 72, the shunt voltage drop is proportional to the current flow in the LED cell 50R. Therefore on the node 85 a current IR proportional to the current flow in the LED cell 50R can be read. Such a current IR, by way of example, can be read by a microcontroller which modifies the switch-on interval Ton in order to adjust the average current value. During a switch-off interval Toff, the drain voltage of the extra MOSFET 72 tends to increase, but the clamp diode 83 blocks the voltage on the input of the microprocessor to a safety voltage level, which value is the sum of the voltage applied by the safety voltage generator Vuc and a voltage drop Vd on the clamp diode 83. Therefore, the microcontroller input is kept at a high safety voltage by the clamp diodes 83, fixing the voltage at Vuc+Vd. The safety voltage Vuc thus represents the supply voltage of the microcontroller, having for instance a value of 5 V.

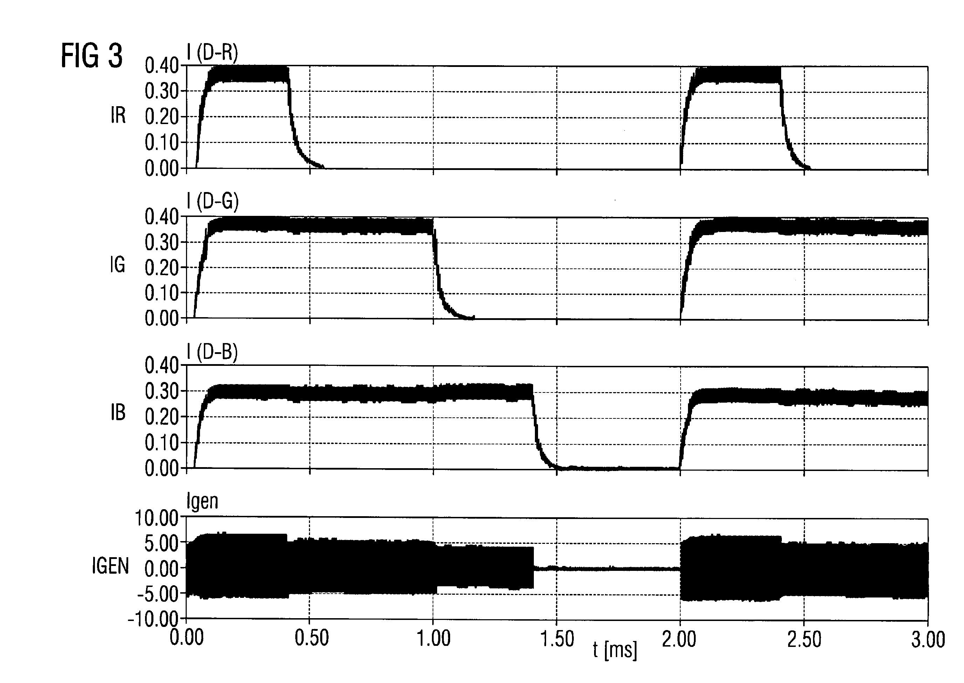

The resistance 81 with the capacitor 82 forms a low-pass filter that permits to the above mentioned microcontroller reading the average value of the current through the LEDs without the need of performing a digital evaluation. Such a low-pass filter in any case performs also a pre-filtering function suppressing possible spikes. In the time diagrams shown in Figure 3, typical behaviours of the currents IR, IG, IB are shown as measured for each channel and a generator output current IGEN, during a PWM dimming phase.

LED with different forward voltages have been used (20% difference between Green LED and Blue LED) and PWM control signals with the same frequency, but different switch-on interval Ton have been applied to the three channels. The resulting waveforms show that starting currents are similar, while the current of each channel is largely unaffected by the disconnection of the other channels.

Those of skill in the art will appreciate that:
- while three channels corresponding to three RGB LED cells are exemplified here, the cells and channels in question may in fact be in any number (the illustration of the possible presence of three cells in the drawing being thus of purely exemplary nature), and
- each channel may include either a single LED or a plurality of LEDs.

In particular, the proposed arrangement is effective not only in association with RGB systems, but in general with parallel LED channels. For instance, when it is desired to have a high power, i.e. to use 24 white LEDs, these LEDs have to be placed in parallel chains, in order to avoid the excessive voltage drop that is determined by a series configuration and that would require a voltage exceeding the voltage limits imposed by the current regulations, e.g. 25 Vrms. Therefore the relevant circuit has to be configured according at least four parallel channels having six LEDs each, that the proposed arrangement is able to drive adding just a few low cost components for each channel.

Of course, without prejudice to the underlying principles of the invention, the details and embodiments may vary, even significantly, with respect to what has been described in the foregoing, by way of example only, without departing from the scope of the invention as defined by the annexed claims.

Therefore, while a particolar embodiment of the present invention has been shown and described with specific attention paid to its possible use in driving RGB LED sources, it should be understood that the present invention is not limited thereto since other embodiments may be made by those skilled in the art withou departing from the scope thereof. It is thus contemplated that the present invention encompasses any such embodiments including the driving of a multichromatic lighting system, e.g. a tunable-whit lighting system.

## Claims

1. A driving arrangement for feeding a current generated by a high frequency generator (10) to a plurality of LED cells (50R, 50G, 50B) each including at least one respective LED, the arrangement including:
- a magnetic element (35) in the flowpath of said current from said generator (10) to said LED cells (50R, 50G, 50B),
- at least two electronic switches (30a, 30b) arranged for connection in a half bridge configuration to the output of said generator (10) and defining a common output node (31) to which said magnetic element (35) is connected,
- a plurality of LED channels (1, 2, 3; 1', 2', 3') each for feeding a respective one of said plurality of LED cells (50R, 50G, 50B), said plurality of LED channels (1, 2, 3; 1', 2', 3') arranged in a parallel configuration therebetween starting from said magnetic element (35).

2. The arrangement of claim 1, **characterized in that** said electronic switches are in the form of MOSFETs (30a, 30b)

3. The arrangement of either if claims 1 or 2, **characterized in that** said plurality of LED channels (1, 2, 3; 1', 2', 3') include respective decoupling capacitors (40) series-connected with said magnetic element (35).

4. The arrangement of claim 3, **characterized in that** said plurality of LED channels (1, 2, 3) include respective voltage doubler like structures (41, 42, 43, 44) arranged between said decoupling capacitors (40) and said respective said LED cells (50R, 50G, 50B).

5. The arrangement of any of claims 1 to 4, **characterized in that** said plurality of LED channels (1, 2, 3) include respective additional electronic switches (72) for performing a dimming function.

6. The arrangement of claim 5, **characterized in that** said additional electronic switches (72) have an associated low side driver (70) for performing a low frequency PWM dimming function.

7. The arrangement of either of claims 5 or 6, **characterized in that** it includes a safety voltage source (Vuc) and clamping diodes (83) for limiting a drain source of said additional electronic switches (72) to a safety voltage level.

8. The arrangement of any of the previous claims, **characterized in that** said plurality of LED channels (1, 2, 3) include a shunt arrangement (80, 81) for sensing the currents fed to the respective LED cells (IR, IG, IB).

9. The arrangement of claim 8, **characterized in that** a microcontroller is provided configured for reading said currents fed to the respective LED cells (IR, IG, IB) and controlling the switch-on time interval (Ton) of said additional electronic switches (72) in order to adjust the average values of said currents fed to the respective LED cells (IR, IG, IB).

10. The arrangement of any of the preceding claims, **characterized in that** said generator (10) is configured for operating said two electronic switches (30a, 30b) connected in a half bridge configuration with a duty cycle near 50%.

11. The arrangement of claim 1, wherein said plurality of LED cells (50R, 50G, 50B) jointly define a tricromatic lighting system.

12. The arrangement of claim 1, wherein said plurality of LED cells (50R, 50G, 50B) jointly define a multichromatic lighting system

13. The arrangement of claim 1, wherein said plurality of LED cells (50R, 50G, 50B) jointly define an RGB lighting system.

14. The arrangement of claim 1, wherein said plurality of LED cells (50R, 50G, 50B) jointly define a tunable-white lighting system.
